# EUROPÄISCHE PATENTSCHRIFT

(11) **EP 2 861 395 B1**
(45) Veröffentlichungstag und Bekanntmachung des Hinweises auf die Patenterteilung: **08.08.2018**
(21) Anmeldenummer: 13734327.3
(22) Anmeldetag: 13.06.2013
(51) Int. Cl.: B29B 9/06

(54) **VERFAHREN UND VORRICHTUNG ZUM GRANULIEREN VON SCHMELZEMATERIAL**
METHOD AND DEVICE FOR GRANULATING MELTED MATERIAL
PROCÉDÉ ET DISPOSITIF DE GRANULATION DE MATÉRIAU EN FUSION

(30) Priorität: 15.06.2012 DE 102012011894
(43) Veröffentlichungstag der Anmeldung: 22.04.2015
(73) Patentinhaber: Maag Automatik GmbH, 63762 Großostheim (DE)
(72) Erfinder: MÜRB, Reinhardt-Karsten, 63743 Aschaffenburg (DE)
(74) Vertreter: Spranger, Stephan
(86) Internationale Anmeldenummer: PCT/EP2013/001753
(87) Internationale Veröffentlichungsnummer: WO 2013/185923

(56) Entgegenhaltungen:
- WO-A1-2007/104536
- WO-A1-2007/107493
- DE-A1- 4 138 513
- DE-A1-102009 006 123
- DE-A1-102009 037 439
- JP-A- S 574 715

## Beschreibung

Die Erfindung betrifft ein Verfahren und eine Vorrichtung zum Granulieren von Schmelzematerial, z.B. aus einem Material oder Materialmix von pharmazeutischem Wirkstoff oder z.B. einem Kunststoffschmelzematerial, wie etwa einem Polymerschmelzematerial, zu Granulatkörnern, insbesondere z.B. zur Herstellung von pharmazeutischen Erzeugnissen aus einem entsprechenden Schmelzematerial.

Schmelzematerial allgemein wird heute beispielsweise durch Granulierung be- und verarbeitet. Bei der Granulierung von Schmelzematerial, bisher insbesondere z.B. von Kunststoffen, kommen generell häufig Extruder oder Schmelzepumpen zum Einsatz. Diese Extruder oder Schmelzepumpen drücken geschmolzenes Kunststoffausgangsmaterial durch Düsen einer Lochplatte in ein Kühlmedium, z.B. Wasser. Dabei wird das aus den Öffnungen der Düsen austretende Material von einer Messeranordnung mit zumindest einem umlaufenden Messer dort abgetrennt, so dass Granulatkörner entstehen. Entsprechende Vorrichtungen, welche beispielsweise Verfahren zur Unterwassergranulierung ausführen, sind als Unterwassergranulierungsanlagen beispielsweise unter der Produktbezeichnung SPHERO® des Unternehmens Automatik Plastics Machinery GmbH bekannt.

Aus der internationalen Anmeldung WO 2007/104536 A1 ist ein Verfahren zur Herstellung eines nicht-klebenden Granulats aus einem Polyestermaterial bekannt, bei welchem das Polyestermaterial als Schmelze in einen Kühlwasserstrom eingeleitet und nach Durchlaufen einer Kühlstrecke vom Kühlwasser abgetrennt wird. Der Kühlstrecke ist in Reihe eine Drosselstrecke, ein Wasser- und Dampfabscheider und eine Wasserzirkulationspumpe nachgeschaltet.

Die internationale Anmeldung WO 2007/107493 A1 offenbart ein Verfahren und eine Vorrichtung zur Granulierung von Polymerschmelzen mit einer Granulierkammer, die mit einer Flüssigkeit geflutet ist, deren Druck oberhalb dem Umgebungsdruck liegt, wobei der Granulierkammer eine als Entspannungsmaschine ausgeführte Drosselvorrichtung zur Einstellung des Druckes in der Granulierkammer und daran anschliessend ein Feststoffabscheider, in dem das Granulat aus der Flüssigkeit abgetrennt wird, nachgeschaltet sind.

Die deutsche Offenlegungsschrift DE 10 2009 006 123 A1 beschreibt ein Verfahren und eine Vorrichtung zum Granulieren von thermoplastischem Kunststoffmaterial, wobei eine strömungsoptimierte radiale Zuströmung eines Kühlfluids vorgesehen ist, um so den energetischen Aufwand für den Messerantrieb im Kühlfluid zu verringern. Spezielle Lösungen der Problematiken der Herstellung pharmazeutischer Erzeugnisse unter Einbeziehung einer entsprechenden Gestaltung sind dort nicht thematisiert.

So kommt es z.B. bei der Herstellung von pharmazeutischen Erzeugnissen aus einem Schmelzematerial wesentlich auf die gleichmäßige Größe und somit Gewicht sowie auf die gleichmäßig erzielbare Formgebung der Erzeugnisse an. Auch sind große Stückzahlen gewünscht, was es erforderlich macht, dass ein entsprechendes Produktionsverfahren zuverlässig bei einer sehr großen Anzahl an Granulatkörnern (z.B. bis zu 50 Millionen Stück pro Stunde) abläuft.

Die deutsche Offenlegungsschrift DE 41 38 513 A1 beschreibt eine feste pharmazeutische Retardform, bei welcher die Formgebung nach der Extrusion einer entsprechenden Schmelzezusammensetzung aus einem Extruder und eine Düsenplatte durch sogenannten Heißabschlag erfolgt, wobei beispielsweise kugelförmige Teilchen erhalten werden sollen. Über die Umsetzbarkeit der dort nur beispielhaft beschriebenen Herstellung bei großen Stückzahlen von herzustellenden Granulatkörnern unter realen Produktionsbedingungen schweigt dieses Dokument allerdings.

Anlagen zur Durchführung des Heißabschlags in Luft als Kühlmedium gibt es schon sehr lange im Markt, da sie verhältnismäßig einfach zu konstruierende Maschinen zum Granulieren von strangextrudierten Thermoplasten darstellen. Dabei werden aus der Lochplatte austretende Schmelzestränge durch dichtest möglich an der Oberfläche rotierende Messer und durch die dem Strangmaterial innewohnende Trägheit in kleine Stücke zu Granulatkörnern zerhackt. Durch die Messerrotation wird aus der Umgebung bzw. dem Inneren des Gehäuses Luft angesaugt, welche die Granulatkörner mehr oder weniger frei und zentrifugal vom Schnittort wegleitet. Die dabei auftretenden Probleme liegen in der schlechten Kühlung der Messer, die mit der Zeit überhitzen und verkleben können, sowie der Neigung zum allgemeinen Verkleben und Verstopfen solcher Anlagen insbesondere bei höheren Durchsätzen mit großen Stückzahlen von herzustellenden Granulatkörnern unter realen Produktionsbedingungen. Weiter neigen so hergestellte Granulatkörner, zumal wenn die Viskosität des Schmelzematerials relativ hoch ist, zu zylindrischen und irregulären Formen, wobei gerade bei pharmazeutischen Materialien in den Folgeanwendungen eher sehr viele kugelförmige Granulatkörner einheitlicher Größe benötigt werden.

Beim Granulieren nach dem Heißabschlagverfahren wird generell z.B. eine schmelzflüssige Polymermatrix durch eine Anordnung von eine oder mehreren Düsen gepresst, die in einer planen Oberfläche endet, welche von einer Messeranordnung aus einem oder mehreren Messern überstrichen wird. Der austretende Strang wird von dem einen oder den Messern in kleine Einheiten, so genannten Granulatkörner unterteilt, die jedes für sich zunächst noch schmelzflüssig sind. Im Weiteren werden die Granulatkörner durch Abkühlung unter die Erstarrungstemperatur der Polymermatrix gebracht, so dass sie sich verfestigen und dabei die der Schmelze eigene Klebrigkeit und Neigung zum Anhaften an einer Oberfläche oder untereinander verliert. Dem Stand der Technik zu Folge wird dabei weiter unterteilt in solche Verfahren und sie anwendende Maschinen, die als Kühlmedium Wasser oder eine ähnliche Flüssigkeit verwenden, so genannten Unterwasser-Heißabschlägen, und so genannten Trocken-Heißabschlägen, das sind solche, bei denen die Kühlung nach dem Schnitt zunächst unter Ausschluss eines flüssigen Mediums nur mit Gas (bevorzugt Luft) vorgenommen wird, oder einem Nebel, der aus einem Gemisch aus einem Gas und Flüssigkeitstropfen besteht. Letztere Gruppe wird weiter unterschieden nach der Art einer weiteren, prozesstechnisch gesehen stromabwärts angeordneten Kühlungsart, nämlich solchen Verfahren und Maschinen, bei denen die mehr oder weniger zylinder- bis kegelstumpfartigen Wand der Schneidkammer von einem Wasserfilm überströmt wird, in den die Granulatkörner hineinfallen und mit dem sie aus der Schneidvorrichtung heraus transportiert werden. Diese werden auch Wasserringgranulator genannt.

Sollen jedoch Produkte granuliert werden, bei denen der Kontakt mit Wasser unerwünscht ist, so werden Granulatoren eingesetzt, bei denen die frisch geschnittenen, noch schmelzflüssigen Granulatkörner ausschließlich durch das Kühl- und Transportgas gekühlt werden. Es ist aber typisch für die dem Stand der Technik entsprechenden Maschinen, dass zum Einen die frisch geschnittenen Granulatkörner durch die Fliehkraft der Messeranordnung radial nach außen beschleunigt werden, zum Anderen, dass der Kühlprozess relativ langsam verläuft und dadurch das Pellet einen relativ weiten Weg im freien Flug zurücklegen muss, bevor es mit einer Oberfläche in Kontakt kommen darf. Dadurch bauen solche Granulatoren auch bei geringen Durchsätzen bereits sehr groß. Die Größe und der im Verhältnis dazu geringe Kühlgasdurchsatz bringen mit sich, dass es zu internen Verwirbelungen kommt, wodurch ein Teil der Granulatkörner zu früh mit den Gehäuse- und sonstigen Maschinenteilen in Kontakt gerät und dort kleben bleiben kann. Ferner wird als Kühlgas typischerweise Umgebungsluft angesaugt, die für sich bereits mit Staub und unerwünschten Substanzen beladen sein kann, und für welche eine Kontrolle der Eigenschaften Temperatur, Feuchtigkeitsgehalt und Staubfreiheit nur aufwändig, wenn überhaupt, möglich ist. Es wäre wünschenswert zur Erlangung eines möglichst störungsarmen Laufs einer Pelletieranlage, dass die Granulatkörner hinreichend schnell abkühlen, so dass sie bereits über eine erstarrte Oberfläche verfügen, bevor sie mit Gehäuse- oder Messerteilen oder mit anderen Granulatkörner in Kontakt geraten. Die Kühlgeschwindigkeit ist in erster Linie eine Funktion des Temperaturunterschieds und in zweiter Linie eine Funktion des schnellen Austauschs von Volumenelementen des Gases untereinander, was in der Fachwelt mit dem Turbulenzgrad bezeichnet wird. Als Kennzahl für den Turbulenzgrad kann die Reynoldszahl herangezogen werden. Dabei hängt die Kühlwirkung primär von den Eigenschaften der Polymerschmelze (speziell Temperatur, Wärmekapazität, Oberfläche, Wärmeleitfähigkeit, Partikelgröße und spezifische Oberfläche) und des Kühlgases selbst (speziell Temperatur, Wärmekapazität, Turbulenzgrad, Massenstromverhältnis Kühlgas/Polymer-Granulatkörner) ab. Die meisten dieser Faktoren sind entweder Materialkonstanten oder prozesstechnisch vorgegebene Parameter, so dass die Kühlwirkung nur durch wenige Möglichkeiten in ihrer Intensität beeinflusst werden kann. Letztlich muss der Wärmeinhalt der Granulatkörner auf das Kühlgas übertragen werden. Unter Vernachlässigung des Wärmeaustauschs mit Gehäuse- und anderen Maschinenteilen gilt dabei, dass die Wärmeinhaltsdifferenz des Schmelzematerials gleich der Wärminhaltsdifferenz des Kühlgases ist.

Dabei wäre es wünschenswert, die Luft unter die Umgebungstemperatur von typischer Weise 25 bis 40 °C zu kühlen, da dadurch der Temperaturgradient zum Polymer bzw. die Geschwindigkeit der Abkühlung in der Oberfläche der Granulatkörner proportional erhöht werden kann und damit die benötigte freie Flugweite verkürzt wird.

Es ist die Aufgabe der vorliegenden Erfindung, ein Verfahren und eine Vorrichtung zum Granulieren von Schmelzematerial, z.B. aus einem Material oder Materialmix von pharmazeutischem Wirkstoff oder z.B. einem Kunststoffschmelzematerial, wie etwa einem Polymerschmelzematerial, zu Granulatkörnern, insbesondere z.B. zur Herstellung von pharmazeutischen Erzeugnissen aus einem entsprechenden Schmelzematerial, vorzusehen, welche(s) die Nachteile des Standes der Technik überwindet und insbesondere auf relativ konstruktiv einfache und kostengünstige Weise eine effektive Granulierung mit einer Reduzierung der Verklebungsneigung von Granulatkörnern mit gleichmäßiger Korngröße und gleichmäßiger sowie gleichbleibender Formgebung auch bei großen Stückzahlen von herzustellenden Granulatkörnern unter realen Produktionsbedingungen ermöglicht.

Diese Aufgabe wird erfindungsgemäß gelöst mit einem Verfahren mit den Merkmalen gemäß Anspruch 1 bzw. mit einer Vorrichtung mit den Merkmalen gemäß Anspruch 5. Bevorzugte Ausführungsformen der Erfindung sind in den jeweiligen abhängigen Ansprüchen definiert.

Beim erfindungsgemäßen Verfahren zur Herstellung von Granulatkörnern aus einem Schmelzematerial tritt das Schmelzematerial aus Düsen in einer Lochplatte aus und wird dann granuliert, wobei eine Messeranordnung mit zumindest einem Messer, angetrieben von einem Motor, der Lochplatte gegenüberliegend angeordnet wird, so dass das zumindest eine Messer die Düsen in der Lochplatte überstreicht und dabei Granulatkörner des austretenden Schmelzematerials abtrennt, wobei eine Schneidkammer in einem Gehäuse vorgesehen wird, welche an die Lochplatte anschließt, zumindest das zumindest eine Messer der Messeranordnung umgibt und von einem gasförmigen Kühlmedium durchströmt wird, so dass dabei die Granulatkörner aus dem Schmelzematerial in dem Kühlmedium verfestigt werden, welches aus einer Zuströmeinrichtung in die Schneidkammer eingeleitet wird. Dabei wird erfindungsgemäß das gasförmige Kühlmedium mittels einer Drosseleinrichtung durch adiabatische Expansion abgekühlt. Die adiabatische Expansion erfolgt erfindungsgemäß beim Eintritt des Kühlmediums in die Schneidkammer mittels der Zuströmeinrichtung, welche die Drosseleinrichtung bildet, die als Zuströmdüsenanordnung in Form einer ringförmigen Schlitzdüse ausgebildet ist, welche in ihrer Schlitzbreite verstellbar ist, oder die adiabatische Expansion erfolgt erfindungsgemäß vor Eintritt des Kühlmediums in die Schneidkammer mittels der Zuströmeinrichtung, die als Zuströmkammer ausgebildet ist, welcher in seiner Düsenöffnung verstellbares Nadelventil, welches die Drosseleinrichtung bildet, stromaufwärts einer Einlassöffnung für das Kühlmedium in die Zuströmkammer vorgeschaltet ist.

Ohne die Notwendigkeit zusätzlicher Kühlaggregate ist somit quasi am Ort oder in unmittelbarer Nähe der benötigten Kühlwirkung die Bereitstellung des erfindungsgemäß gekühlten gasförmigen Kühlfluids rein unter Ausnutzung der entsprechenden physikalischen Vorgänge bei adiabatischer Entspannung ermöglicht.

Erfindungsgemäß bevorzugt wird die Zuströmeinrichtung vorgesehen als eine separate Zuströmkammer, welche die Schneidkammer im Rotationsbereich des zumindest einen Messers, also im Bereich der Schnittebene, umfänglich umgibt, und eine umfänglich um die Schneidkammer angeordnete Zuströmdüsenanordnung zwischen der Zuströmkammer und der Schneidkammer, mittels welcher das gasförmige Kühlmedium umfänglich von verschiedenen Seiten radial von außen nach innen oder im Wesentlichen radial von außen nach innen in die Schneidkammer eingeleitet wird, wobei zumindest im Rotationsbereich eine zentripetale oder zumindest im Wesentlichen zentripetale Strömung des gasförmigen Kühlmediums ausgebildet wird und im Weiteren das gasförmige Kühlmedium und die darin befindlichen Granulatkörner einem Auslass der Schneidkammer zugeführt werden.

Bei dem erfindungsgemäßen Verfahren wird so durch die adiabatische Kühlung und entsprechend gestaltete Zuströmkammer und durch die Zuströmdüsenanordnung eine umfänglich gleichmäßige, d.h. über den Umfang gleich bleibend große oder zumindest im Wesentlichen gleich bleibend große, und optimal gekühlte Durchsatzmenge an gasförmigem Kühlmedium, z.B. Luft oder ein Inertgas wie etwa Stickstoff oder ein Reaktionsgas, welches so ausgewählt ist, dass es mit dem zu granulierenden pharmazeutischen Schmelzematerial eine gewünschte chemische Reaktion eingehen kann, vorgesehen, welche entsprechend in dem Rotationsbereich in das Gehäuse von allen Seiten radial von außen nach innen strömend eingeleitet wird.

Erfindungsgemäß wird somit das zur Kühlung und zum Abtransport der frisch abgetrennten Granulatkörner benötigte, speziell im Hinblick auf die üblicher Weise vorhandene Feuchtigkeitsempfindlichkeit von pharmazeutischen Materialien gasförmige Kühlmedium bzw. Kühlfluid so gekühlt und dem Gehäuse der entsprechenden Granuliervorrichtung zugeführt, dass ein hoher spezifischer Durchsatz an Material (großen Stückzahlen relativ kleiner Granulatkörnern) möglich, wobei gleichzeitig ein Verklumpen der Granulatkörner durch die erfindungsgemäß gute Kühlung und das erfindungsgemäß erreichbare gleichmäßige Strömungsverhalten des gasförmigen Kühlmediums mit den darin sich befindenden Granulatkörnern aus dem Schmelzematerial vermeidbar ist.

Bevorzugt könnte durch die entsprechend vorgesehene Gestaltung der Zuströmeinrichtung und/oder Festlegung der Abmessungen der Zuströmdüsenanordnung dem gasförmigen Kühlmedium bei Eintritt in das Gehäuse bzw. bei Eintritt in die Schneidkammer neben der adiabatischen Entspannung zur Kühlung dort auch eine (zusätzliche) Umlaufgeschwindigkeit verliehen werden, die in etwa der Rotationsgeschwindigkeit des zumindest einen Messers der Messeranordnung entspricht. Die dabei erfolgende Beschleunigung des gasförmigen Kühlmediums auf die gewünschte Geschwindigkeit, d.h. die zur Erreichung des entsprechenden Drehimpulses benötigte Energie, kann dem Druck des gasförmigen Kühlmediums entnommen werden. Die zusätzliche Umlaufgeschwindigkeit des gasförmigen Kühlmediums, welche oben zusätzlich vorgesehen sein kann, kann entweder mechanisch über die Gestaltung der Zuströmdüsenanordnung und/oder über die Steuerung der Durchsatzmenge des gasförmigen Kühlmediums eingestellt und an unterschiedliche sonstige Verfahrensparameter (Materialdurchsatz, zu granulierendes Schmelzematerial, Größe der Granulatkörner u.Ä.) angepasst werden. Auch die Anzahl und Drehzahl des/der Messer kann entsprechend angepasst werden.

Das adiabatisch gekühlte gasförmige Kühlmedium kann dabei in etwa mit derselben Geschwindigkeit wie die Rotationsgeschwindigkeit des zumindest einen Messers im Rotationsbereich zuströmen, wird das zumindest eine Messer bzw. gegebenenfalls ein Zwischenraum zwischen mehreren Messern der Messeranordnung durchfluten und die frisch abgetrennten Granulatkörner aus dem Rotationsbereich mit sich abführen, was ein Verkleben der Granulatkörner auch bei höheren Durchsatzmengen zuverlässig verhindern kann. Bei der sich ergebenden Strömung wird sich bei Annäherung an die Achse der Rotation des zumindest einen Messers der Messeranordnung die entsprechende Umlaufgeschwindigkeit des gasförmigen Kühlmediums erhöhen und somit sich die entsprechende Zentrifugalkraft erhöhen, so dass die Strömungsbewegung von außen nach innen hin zunehmend erschwert wird und letztlich verhindert wird. Somit wird das gasförmige Kühlmedium in den Raum hinter dem zumindest einen Messer der Messeranordnung strömen und dabei in einer wendelförmigen Strömung von dem Bereich der Lochplatte und dem Rotationsbereich in dem Gehäuse wegströmen.

Zur Vermeidung von Verdichtungsstößen, welche die Temperatur des gasförmigen Kühlmediums wieder erhöhen würden, sollte das gasförmige Kühlmedium möglichst so geführt werden, dass seine Strömung mit dem für die Kühlung des Schmelze-Durchsatzes nötigen Massenstrom einerseits einen Druckverlust in Höhe des Speisedrucks über dem Atmosphärendruck erzeugt, andererseits nirgendwo die lokale Schallgeschwindigkeit des gasförmigen Kühlmediums überschritten wird.

Die Strömungsführung des gasförmigen Kühlmediums verläuft dabei bevorzugt so, dass sie sich senkrecht zur Lochplatte ausrichtet und wegströmt. Dort entstehende Granulatkörner werden daher senkrecht bis wendelförmig von der Lochplatte weggeblasen. Der Volumenstrom des erfindungsgemäß gekühlten gasförmigen Kühl- und Transportmediums wird dabei zweckmäßig so gewählt, dass die Granulatkörner sofort nach dem Schnitt vereinzelt werden, also im großen Überschuss.

Beispielsweise treten je Stunde 4 kg Polymer/pharmazeutisches Schmelzematerial von 1 200 kg/m³ Dichte aus einer Lochplatte mit 24 Löchern und einem Teilkreisdurchmesser d_{Lp} von rund 60 mm aus und werden durch 9 Messer mit n = 3 900 1/min in 13 900 Granulatkörner pro Sekunde mit 0,5 mm Durchmesser zerteilt. Die Granulatkörner sollen in jeder Richtung einen Abstand a von etwa 1 cm zueinander haben. Der Massenstrom des gasförmigen Kühl- und Fördermediums beträgt dabei etwa 8 kg/h und trägt dabei 4 kg/h Fördergut, was einem Verhältnis Fördergut zu Fördermedium ("Beladung") von 0,5 entspricht. Dies ist weit weniger als in der pneumatischen Förderung üblich, wo selbst bei Flugförderung ein Beladungsverhältnis von 10 bis 20, bei der Dickstromförderung von 60 und darüber üblich ist. Demgegenüber wird also die Kühl-und Transportluft im großen Überschuss zugeführt.

Auch kann bei dem erfindungsgemäßen Verfahren eine Durchsatzmenge und/oder ein Druck und/oder eine Richtung des über die Zuströmeinrichtung zugeführten gasförmigen Kühlmediums mittels einer Steuereinrichtung so gesteuert werden, dass dadurch die adiabatische Entspannung und somit die Temperatur des Kühlmediums in die Schneidkammer eingestellt wird.

Bevorzugt kann gemäß dem erfindungsgemäßen Verfahren das Verhältnis des Massestroms des gasförmigem Kühlmediums zum Massestrom der sich darin befindenden Granulatkörner im Gehäuse ein Beladungsverhältnis, definiert als Masse der Granulatkörner pro Stunde zu Masse des gasförmigen Kühlmediums pro Stunde, im Bereich von 0,3 bis 0,7 betragen, bevorzugt ein Beladungsverhältnis von 0,5 betragen. Das Verkleben von Granulatkörnern kann somit auch bei hohen Durchsatzmengen besonders zuverlässig vermieden werden, da ausreichend Kühlmedium vorhanden ist, um die Granulatkörner ohne Verklumpen einzeln zu umgeben und so zu kühlen und zu transportieren.

Bevorzugt können die Granulatkörner, welche sich in dem adiabatisch gekühlten gasförmigen Kühlmedium befinden, nach dem Rotationsbereich weiter dem Bereich des Auslasses der Schneidkammer zuströmen, in welchem sie in einem Winkel von weniger als 10° gegen eine dortige Wandung der Schneidkammer geführt werden, so dass den sich in dem gasförmigen Kühlmedium befindlichen Granulatkörnern dort eine rollende Bewegung aufgeprägt wird. Somit kann erfindungsgemäß bevorzugt die gleichmäßige Formgebung der Granulatkörner besonders zuverlässig erreichbar sein.

Das gasförmige Kühlmedium kann erfindungsgemäß bevorzugt Luft oder ein Inertgas oder ein Reaktionsgas ist, welches so ausgewählt ist, dass es mit dem zu granulierenden Schmelzematerial, bevorzugt einem Schmelzematerial aus einem Material oder Materialmix von pharmazeutischem Wirkstoff, eine gewünschte chemische Reaktion eingehen kann.

Die erfindungsgemäße Vorrichtung zur Herstellung von Granulatkörnern aus einem Schmelzematerial weist eine Lochplatte mit darin angeordneten Düsen auf, aus welchen das Schmelzematerial austritt, wobei der Lochplatte eine Schneidanordnung mit einem Messerkopf mit zumindest einem Messer, und einer Messerwelle, angetrieben von einem Motor, gegenüberliegt, so dass das zumindest eine Messer die Düsen in der Lochplatte umlaufend überstreicht und dabei Granulatkörner des dort austretenden Schmelzematerials abtrennt, wobei die Vorrichtung eine Schneidkammer in einem Gehäuse aufweist, welche an die Lochplatte anschließt, zumindest das zumindest eine Messer der Schneidanordnung umgibt und von einem gasförmigen Kühlmedium durchströmt wird, welches aus einer Zuströmeinrichtung in die Schneidkammer eingeleitet wird, so dass dabei die Granulatkörner aus dem Schmelzematerial in dem Kühlmedium verfestigt werden. Erfindungsgemäß ist dabei eine Drosseleinrichtung so vorgesehen, dass sie das gasförmige Kühlmedium durch adiabatische Expansion abkühlt._Erfindungsgemäß ist die Zuströmeinrichtung, welche die Drosseleinrichtung bildet, als Zuströmdüsenanordnung in Form einer ringförmigen Schlitzdüse ausgebildet, welche in ihrer Schlitzbreite verstellbar ist, so dass die adiabatische Expansion beim Eintritt des Kühlmediums in die Schneidkammer erfolgt, oder die Zuströmeinrichtung ist als Zuströmkammer ausgebildet, welcher in seiner Düsenöffnung verstellbares Nadelventil, welches die Drosseleinrichtung bildet, stromaufwärts einer Einlassöffnung für das Kühlmedium in die Zuströmkammer vorgeschaltet ist, so dass die adiabatische Expansion vor Eintritt des Kühlmediums in die Schneidkammer erfolgt.

Zur weiteren Optimierung der Kühlungs- sowie Strömungsverhältnisse in der erfindungsgemäßen Vorrichtung (siehe dazu auch die obigen diesbezüglichen Ausführungen) ist die Zuströmeinrichtung erfindungsgemäß bevorzugt eine separate Zuströmkammer, welche die Schneidkammer im Rotationsbereich des zumindest einen Messers umfänglich umgibt, und eine umfänglich um die Schneidkammer angeordnete Zuströmdüsenanordnung zwischen der Zuströmkammer und der Schneidkammer aufweist, so dass dort das gasförmige Kühlmedium umfänglich von verschiedenen Seiten radial von außen nach innen oder im Wesentlichen radial von außen nach innen in die Schneidkammer einleitbar ist, wobei zumindest im Rotationsbereich eine zentripetale oder zumindest im Wesentlichen zentripetale Strömung des gasförmigen Kühlmediums ausgebildet wird und im Weiteren das gasförmige Kühlmedium und die darin befindlichen Granulatkörner einem Auslass der Schneidkammer zugeführt werden.

Zweckmäßig kann zumindest die Zuströmkammer mit einem wärmeisolierenden Material ausgekleidet sein, bevorzugt aus Teflon® oder Emaille. Mit dieser Maßnahme kann das dortige gasförmige Kühlmedium vor unerwünschter Erwärmung geschützt werden.

Besonders konstruktiv einfach ist die erfindungsgemäße Gestaltung, bei welcher die Zuströmdüsenanordnung als ringförmige Schlitzdüse ausgebildet ist, welche in Ihrer Schlitzbreite verstellbar ist, so dass sie die Drosseleinrichtung bildet. Somit erfolgt die Abkühlung des gasförmigen Kühlfluids durch adiabatische Expansion erfindungsgemäß auch besonders wünschenswert unmittelbar am Ort des benötigten Kälteeintrags beim Eintritt in die Schneidkammer.

Wie oben erwähnt kann auch stromaufwärts einer Einlassöffnung für das Kühlmedium in die Zuströmkammer ein in seiner Düsenöffnung verstellbares Nadelventil erfindungsgemäß so vorgesehen sein, dass es die Drosseleinrichtung bildet. Diese Gestaltung hat den Vorteil, dass ein standardisiertes Bauteil, wie eben ein solches Nadelventil, die erfindungsgemäße adiabatische Kühlung des gasförmigen Kühlfluids ermöglicht.

Die Verfestigung der Granulatkörner kann zusätzlich unterstützt werden, indem die Wandung der Schneidkammer gekühlt wird, zum Beispiel in doppelwandiger Ausführung des Gehäuses dort von Kühlfluid durchströmt wird.

Zur weiteren Strömungsoptimierung auch im Bereich des Auslasses kann der Auslass in dem der Zuströmeinrichtung abgewandten Bereich der Schneidkammer der erfindungsgemäßen Vorrichtung angeordnet sein. Somit kann ein gleichmäßiges Abströmen des gasförmigen Kühlmediums mit den sich darin befindenden Granulatkörnern aus dem Schmelzematerial erreicht werden, wodurch auch ein eventuelles Verklumpen in der Schneidkammer und insbesondere im Bereich des Auslasses zusätzlich besonders zuverlässig vermieden werden kann. Dabei können die Granulatkörner beispielsweise in einer Auslaufspirale gesammelt und tangential vom Gehäuse weggeführt werden.

Die bezüglich dem erfindungsgemäßen Verfahren erläuterten Merkmale und Vorteile der Erfindung gelten, soweit anwendbar, auch für die erfindungsgemäße Vorrichtung, und umgekehrt.

Die vorliegende Erfindung bietet die Möglichkeit die Temperatur senkende adiabatische Expansion eines gasförmigen Kühlmediums direkt oder im Wesentlichen direkt für die Kühlung des gasförmigen Kühlfluids und so zur Kühlung der Granulatkörner in der Schneidkammer zu nutzen. Die Temperatur des gasförmigen Kühlfluids kann damit stark und bis unter die Umgebungstemperatur erniedrigt, werden Besonders ökonomisch kann dabei sein, dass das gasförmige Kühlfluid unter Bedingungen zugeführt werden kann, wie sie für Druckluftnetze üblich sind, also bei etwa 6 bar Netzdruck und Umgebungstemperatur. Durch die erfindungsgemäße Anwendung der adiabatischen Expansion kann man dennoch ohne weitere Kühlaggregate z.B. eine Abkühlung des gasförmigen Kühlfluids um 125 °C erreichen.

Die Erfindung wird im Folgenden beispielhaft anhand der beigefügten Figuren sowie anhand der angegebenen Beispiele näher erläutert werden. Es zeigt:
- Fig. 1: in einer schematischen Längsschnittansicht einer Granulierungsvorrichtung gemäß einer ersten Ausführungsform der Erfindung zur Durchführung des erfindungsgemäßen Verfahrens;
- Fig. 2: in einer schematischen Querschnittansicht eine Granulierungsvorrichtung gemäß einer zweiten Ausführungsform der Erfindung zur Durchführung des erfindungsgemäßen Verfahrens; und
- Fig. 3: in einer schematischen Querschnittansicht eine Granulierungsvorrichtung gemäß einer weiteren nicht erfindungsgemässen Ausführungsform.

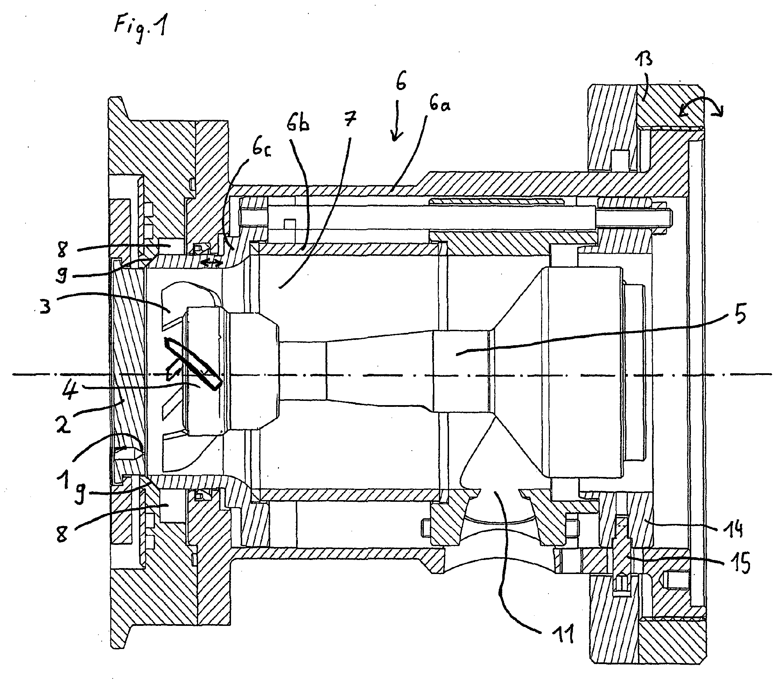

Die Fig. 1 zeigt schematisch in einer Längschnittansicht eine Vorrichtung zum Granulieren von aus Düsen 1 in einer Lochplatte 2 austretendem Schmelzematerial, z.B. einem pharmazeutischen Schmelzematerial.

Die in Fig. 1 schematisch gezeigte Granulierungsvorrichtung weist eine Lochplatte 2 mit darin vorgesehenen Düsen 1 auf, wobei die Anordnung der Düsen 1 im Wesentlichen rotationssymmetrisch ist und auch die sonstige Gestaltung der Vorrichtung rotationssymmetrisch bzw. im Wesentlichen rotationssymmetrisch ist. Gemäß der Darstellung der Fig. 1 ist der Lochplatte 2 eine Messeranordnung zugeordnet mit zumindest einem Messer 3, welches von einem Messerträger 4, angeordnet auf einer Messerwelle 5, gebildet ist. Die Messeranordnung wird von einem Motor (in Fig. 1 nicht gezeigt) angetrieben, so dass das zumindest eine Messer 3 die Düsen 1 in der Lochplatte 2 überstreicht und dabei Granulatkörner des aus den Düsen 2 austretenden z.B. pharmazeutischen Schmelzematerials abtrennt. Das Schmelzematerial kann auf herkömmliche Art und Weise geschmolzen werden und zum Beispiel über einen Extruder oder eine Schmelzepumpe (in Fig. 1 nicht gezeigt) zu dem Bereich der Lochplatte 2 transportiert werden und aus den Düsen 1 dort gedrückt werden. Die Vorrichtung weist eine Schneidkammer 7 in einem Gehäuse 6 mit einem Gehäuseaußenbereich 6a und einem Gehäuseinnenbereich 6b auf, welche an die Lochplatte 2 anschließt. Die Schneidkammer 7 wird im Betrieb erfindungsgemäß mit einem gasförmigen Kühlmedium, üblicherweise z.B. Luft, gefüllt und durchströmt, wobei die Schneidkammer 7 zumindest das eine Messer 3 und den Messerträger sowie zumindest einen Teil der Messerwelle 5 umgibt. Die Messerwelle 5 ist in dem Gehäuseteil, welches der Lochplatte 2 abgewandt ist, fluiddicht aus dem Gehäuse 6 herausgeführt, und der Motor (in Fig. 1 nicht gezeigt) ist vorgesehen, welcher über die Messerwelle 5 das zumindest eine Messer 3 zu einer Rotationsbewegung antreibt.

Es ist erfindungsgemäß eine Zuströmeinrichtung vorgesehen mit einer separaten Zuströmkammer 8, welche die Schneidkammer 7 im Bereich der Rotation des zumindest einen Messers 3 umfänglich umgibt, und mit einer umfänglich verlaufend angeordneten Zuströmdüsenanordnung 9 zwischen der Zuströmkammer 8 und der Schneidkammer 7, wobei die Zuströmdüsenanordnung 9 im in der Fig. 1 gezeigten Fall eine umfänglich umlaufende Ringspaltdüse mit einer über den Umfang gleichbleibenden und einstellbaren Düsenbreite von z.B. 3 mm ist. Die Zuströmkammer 8 weist erfindungsgemäß über deren Umfang, d.h. umfänglich, von einer Einlassöffnung 10 für das Kühlmedium in der Zuströmkammer 8 beginnend in Rotationsrichtung des zumindest einen Messers 3 einen abnehmenden Querschnitt auf.

Gemäß der in Fig. 1 gezeigten Gestaltung strömt durch die Zuströmdüsenanordnung 9 eine umfänglich gleichmäßige Durchsatzmenge an gasförmigem Kühlmedium, wobei erfindungsgemäß dort die Zuströmdüsenanordnung 9 als Drosseleinrichtung ausgebildet ist, bei deren Durchtritt das gasförmige Kühlmedium sich adiabatisch entspannt und somit abkühlt. Ferner wird erfindungsgemäß durch die ringförmige Ausgestaltung der Zuströmdüsenanordnung 9 zwischen der Zuströmkammer 8 und der Schneidkammer 7, wie diese in der Fig. 1 dargestellt ist, das gasförmige Kühlmedium umfänglich von allen Seiten radial von außen nach innen oder im Wesentlichen radial von außen nach innen in die Schneidkammer 7 eingeleitet. Dabei ergibt sich zumindest im Rotationsbereich des zumindest einen Messers 3 eine zentripetale oder zumindest im Wesentlichen zentripetale Strömung des gasförmigen Kühlmediums. Die Zuströmdüsenanordnung 9 ist dabei als ringförmige Schlitzdüse mit verstellbarer Schlitzbreite so gestaltet, dass in Umfangsrichtung immer eine Möglichkeit gegeben ist, dass das gasförmige Kühlmedium aus allen Bereichen der umlaufenden Zuströmkammer 8 strömen kann. Die Verstellbarkeit der Schlitzbreite der Zuströmdüsenanordnung 9 ergibt sich gemäß der Darstellung der Fig. 1 durch eine mögliche Verschiebung des die Schneidkammer 7 zumindest im Rotationsbereich des zumindest einen Messers 3 dort umschließenden Wandelements 6c mit einer ersten, der Lochplatte 2 abgewandten Düsenfläche, welches in axialer Richtung der gesamten Anordnung (Doppelpfeil in Fig. 1) über die damit verbundenen inneren Gehäuseteile 6b, einem Innenring 14 und einen damit sowie mit einer verdrehbaren Nonius-Schraube 13 (Doppelpfeil in Fig. 1) gegen das äußere Gehäuseteil 6a und somit auch gegen die auf Seite der Lochplatte 2 vorhandene Düsenfläche der Zuströmdüsenanordnung 9 verschiebbar ist. An Stelle der in Fig. 1 gezeigten Anordnung mit Nonius-Schraube 13 kann eine axiale Verstellung der Schlitzbreite der Zuströmdüsenanordnung 9 auch über eine Kulissenführung im Gehäuse 6 realisiert werden (in Fig. 1 nicht gezeigt). Über die einstellbare Schlitzbreite kann die Geometrie der Zuströmdüsenanordnung so gewählt werden, dass diese erfindungsgemäß als Drosselanordnung für das dort hindurch in die Schneidkammer 7 eintretende gasförmige Kühlfluid dienen kann, welches sich bei geeigneter Schlitzbreite dort hindurch tretend adiabatisch entspannt und sich so abkühlt.

Gemäß der Darstellung der Fig. 1 ist ein Auslass 11 in dem der Zuströmeinrichtung abgewandten Bereich der Schneidkammer 7 angeordnet. Nach dem Rotationsbereich strömt das gasförmige Kühlmedium mit den darin sich befindenden Granulatkörnern weiter dem Bereich des Auslasses 11 der Schneidkammer 7 zu, in welchem sie beispielsweise bevorzugt in einem Winkel von weniger als 10° gegen eine dortige Wandung der Schneidkammer 7 geführt werden, so dass den sich in dem gasförmigen Kühlmedium befindlichen Granulatkörnern aus dem Schmelzematerial dort eine rollende Bewegung aufgeprägt wird.

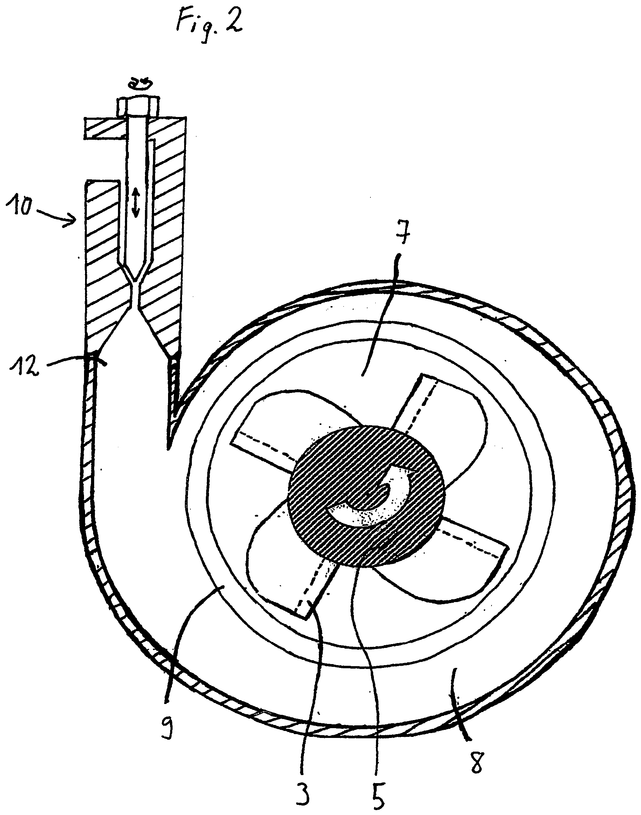

Die Fig. 2 zeigt in einer schematischen Querschnittansicht eine Granulierungsvorrichtung gemäß einer zweiten Ausführungsform der Erfindung zur Durchführung des erfindungsgemäßen Verfahrens.

Gemäß der in Fig. 2 gezeigten Ausführungsform der erfindungsgemäßen Drosseleinrichtung ist stromaufwärts einer Einlassöffnung 12 für das Kühlmedium in die Zuströmkammer (8) ein in seiner Düsenöffnung verstellbares Nadelventil 10 vorgesehen. Durch Verdrehen der Stellschraube des Nadelventils 10 kann die Ringbreite der Durchtrittsöffnung des Nadelventils 10 eingestellt werden, so dass dieses erfindungsgemäß als Drosselanordnung für das dort hindurch in die Zuströmkammer 8 und dann über die Zuströmdüsenanordnung 9 in die Schneidkammer 7 eintretende gasförmige Kühlfluid dienen kann, welches sich bei geeigneter Ringbreite dort hindurch tretend adiabatisch entspannt und sich so abkühlt.

Wie in Fig. 2 zu sehen, kann die Zuströmkammer 8 über deren Umfang, d.h. umfänglich, von einer Einlassöffnung 12 für das Kühlmedium in der Zuströmkammer 8 beginnend in Rotationsrichtung des zumindest einen Messers 3 einen abnehmenden Querschnitt aufweisen.

Gemäß der Darstellung der Fig. 2 ist die Zuströmdüsenanordnung 9 als durchgehende Ringdüse ausgebildet.

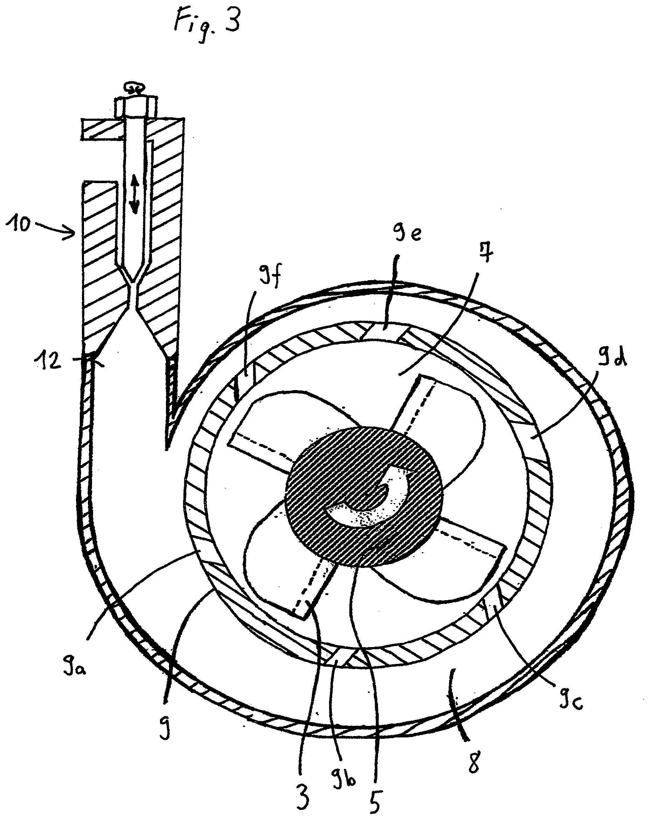

Die Fig. 3 zeigt in einer schematischen Querschnittansicht eine Granulierungsvorrichtung gemäß einer weiteren nicht erfindungsgemässen Ausführungsform. Die in Fig. 3 gezeigte Ausführungsform der Vorrichtung unterscheidet sich von der in Fig. 2 gezeigten Ausführungsform nur dadurch, dass anders als in Fig. 2 die Zuströmdüsenanordnung 9 nicht als durchgehende Ringdüse ausgebildet ist, sondern umfänglich um die Schneidkammer 7 herum dort mehrere Zuströmdüsenöffnungen 9a-9f aufweist, welche eine zentripetale bzw. im wesentliche zentripetale Zuströmung des durch das als Drosseleinrichtung dienende Nadelventil 10 adiabatisch gekühlte gasförmige Kühlmedium ermöglicht.

Das gasförmige Medium kann bevorzugt beispielsweise gereinigte und entfeuchtete Prozessluft sein, welche über genormte Anschlüsse (in den Fig. nicht gezeigt) der Zuströmkammer 8 direkt (Fig. 1) oder über das Nadelventil 10 (Fig. 2 und Fig. 3) zugeführt wird.

In den Figuren bezeichnen gleiche Bezugszeichen jeweils gleiche Elemente der gezeigten erfindungsgemäßen Vorrichtungen, wobei die dazu erfolgten Angaben jeweils für alle entsprechend bezeichneten Elemente gelten. Kombinationen von in verschiedenen Fig. gezeigten Elementen sind, soweit sinnvoll, möglich.

Die in den Figuren 1 und 2 gezeigten Vorrichtungen dienen der Durchführung des erfindungsgemäßen Verfahrens z.B. in der Anwendung für die Herstellung von pharmazeutischen Erzeugnissen bzw. Granulatkörnern aus einem entsprechenden Schmelzematerial.

## Patentansprüche

1. Verfahren zur Herstellung von Granulatkörnern aus einem Schmelzematerial, wobei das Schmelzematerial aus Düsen (1) in einer Lochplatte (2) austritt und dann granuliert wird, eine Messeranordnung mit zumindest einem Messer (3), angetrieben von einem Motor, der Lochplatte (2) gegenüberliegend angeordnet wird, so dass das zumindest eine Messer (3) die Düsen (1) in der Lochplatte (2) überstreicht und dabei Granulatkörner des austretenden Schmelzematerials abtrennt, wobei eine Schneidkammer (7) in einem Gehäuse vorgesehen wird, welche an die Lochplatte (2) anschließt, zumindest das zumindest eine Messer (3) der Messeranordnung umgibt und von einem gasförmigen Kühlmedium durchströmt wird, so dass dabei die Granulatkörner aus dem Schmelzematerial in dem Kühlmedium verfestigt werden, welches aus einer Zuströmeinrichtung in die Schneidkammer (7) eingeleitet wird, und das gasförmige Kühlmedium mittels einer Drosseleinrichtung durch adiabatische Expansion abgekühlt wird, **dadurch gekennzeichnet, dass**
die adiabatische Expansion beim Eintritt des Kühlmediums in die Schneidkammer (7) erfolgt mittels der Zuströmeinrichtung, welche die Drosseleinrichtung bildet, die als Zuströmdüsenanordnung (9) in Form einer ringförmigen Schlitzdüse ausgebildet ist, welche in ihrer Schlitzbreite verstellbar ist, oder
die adiabatische Expansion vor Eintritt des Kühlmediums in die Schneidkammer (7) erfolgt mittels der Zuströmeinrichtung, die als Zuströmkammer (8) ausgebildet ist, welcher in seiner Düsenöffnung verstellbares Nadelventil (10), welches die Drosseleinrichtung bildet, stromaufwärts einer Einlassöffnung (12) für das Kühlmedium in die Zuströmkammer (8) vorgeschaltet ist.

2. Verfahren nach Anspruch 1, **dadurch gekennzeichnet, dass** die Zuströmkammer (8) als eine separate Zuströmkammer (8) vorgesehen wird, welche die Schneidkammer (7) im Rotationsbereich des zumindest einen Messers umfänglich umgibt, mit einer umfänglich um die Schneidkammer (7) angeordneten Zuströmdüsenanordnung zwischen der Zuströmkammer (8) und der Schneidkammer (7), mittels welcher das gasförmige Kühlmedium umfänglich von verschiedenen Seiten radial von außen nach innen oder im Wesentlichen radial von außen nach innen in die Schneidkammer (7) eingeleitet wird, wobei zumindest im Rotationsbereich eine zentripetale oder zumindest im Wesentlichen zentripetale Strömung des gasförmigen Kühlmediums ausgebildet wird und im Weiteren das gasförmige Kühlmedium und die darin befindlichen Granulatkörner einem Auslass der Schneidkammer (7) zugeführt werden.

3. Verfahren nach einem der Ansprüche 1 bis 2, **dadurch gekennzeichnet, dass** die Granulatkörner, welche sich in dem gasförmigen Kühlmedium befinden, nach dem Rotationsbereich weiter dem Bereich des Auslasses der Schneidkammer (7) zuströmen, in welchem sie in einem Winkel von weniger als 10° gegen eine dortige Wandung der Schneidkammer (7) geführt werden, so dass den sich in dem gasförmigen Kühlmedium befindlichen Granulatkörnern dort eine rollende Bewegung aufgeprägt wird.

4. Verfahren nach einem der Ansprüche 1 bis 3, **dadurch gekennzeichnet, dass** das gasförmige Kühlmedium Luft oder ein Inertgas oder ein Reaktionsgas ist, welches so ausgewählt ist, dass es mit dem zu granulierenden Schmelzematerial, bevorzugt einem Schmelzematerial aus einem Material oder Materialmix von pharmazeutischem Wirkstoff, eine chemische Reaktion eingehen kann.

5. Vorrichtung zur Herstellung von Granulatkörnern aus einem Schmelzematerial, mit einer Lochplatte (2) mit darin angeordneten Düsen (1), zum Austritt von Schmelzematerial, wobei der Lochplatte (2) eine Schneidanordnung mit einem Messerkopf mit zumindest einem Messer (3), und einer Messerwelle (5), antreibbar von einem Motor, gegenüberliegt, so dass das die Düsen (1) in der Lochplatte (2) umlaufend von dem zumindest eine Messer (3) überstreichbar sind und dabei Granulatkörner des dort austretenden Schmelzematerials abtrennbar sind, wobei die Vorrichtung eine Schneidkammer (7) in einem Gehäuse (6, 6a, 6b) aufweist, welche an die Lochplatte (2) anschließt, zumindest das zumindest eine Messer (3) der Schneidanordnung umgibt und von einem gasförmigen Kühlmedium durchströmbar ist, welches aus einer Zuströmeinrichtung in die Schneidkammer (7) einleitbar ist, so dass dabei die Granulatkörner aus dem Schmelzematerial in dem Kühlmedium verfestigbar sind, wobei weiter eine Drosseleinrichtung so vorgesehen ist, dass durch sie das gasförmige Kühlmedium durch adiabatische Expansion abkühlbar ist,
**dadurch gekennzeichnet, dass**
die Zuströmeinrichtung, welche die Drosseleinrichtung bildet, als Zuströmdüsenanordnung (9) in Form einer ringförmigen Schlitzdüse ausgebildet ist, welche in ihrer Schlitzbreite verstellbar ist, so dass die adiabatische Expansion beim Eintritt des Kühlmediums in die Schneidkammer (7) erfolgt, oder
die Zuströmeinrichtung als Zuströmkammer (8) ausgebildet ist, welcher in seiner Düsenöffnung verstellbares Nadelventil (10), welches die Drosseleinrichtung bildet, stromaufwärts einer Einlassöffnung (12) für das Kühlmedium in die Zuströmkammer (8) vorgeschaltet ist, so dass die adiabatische Expansion vor Eintritt des Kühlmediums in die Schneidkammer (7) erfolgt.

6. Vorrichtung nach Anspruch 5, **dadurch gekennzeichnet, dass** die Zuströmkammer (8) als eine separate Zuströmkammer (8) ausgebildet ist, welche die Schneidkammer (7) im Rotationsbereich des zumindest einen Messers (3) umfänglich umgibt, und eine umfänglich um die Schneidkammer (7) angeordnete Zuströmdüsenanordnung (9) zwischen der Zuströmkammer (8) und der Schneidkammer (7) aufweist, so dass dort das gasförmige Kühlmedium umfänglich von verschiedenen Seiten radial von außen nach innen oder im Wesentlichen radial von außen nach innen in die Schneidkammer (7) einleitbar ist, wobei zumindest im Rotationsbereich eine zentripetale oder zumindest im Wesentlichen zentripetale Strömung des gasförmigen Kühlmediums ausgebildet wird und im Weiteren das gasförmige Kühlmedium und die darin befindlichen Granulatkörner einem Auslass (11) der Schneidkammer (7) zugeführt werden.

7. Vorrichtung nach Anspruch 6, **dadurch gekennzeichnet, dass** zumindest die Zuströmkammer (8) mit einem wärmeisolierenden Material ausgekleidet ist, bevorzugt aus Teflon® oder Emaille.

## Claims

1. Method for producing pellets from a melt material, wherein the melt material emerges from nozzles (1) in a perforated plate (2) and is then granulated, a motor-driven cutter arrangement having at least one blade (3) is located opposite the perforated plate (2) so that the at least one blade (3) passes over the nozzles (1) in the perforated plate (2) and in so doing cuts pellets of the emerging melt material, wherein a cutting chamber (7) is provided in a housing, which chamber adjoins the perforated plate (2) and encloses at least the at least one blade (3) of the cutter arrangement, and through which chamber flows a gaseous coolant, so that in the process the pellets of the melt material are solidified in the coolant, which is introduced into the cutting chamber (7) from an inlet apparatus, and the gaseous coolant is cooled through adiabatic expansion by means of a throttling device,
**characterized in that**
the adiabatic expansion is accomplished when the coolant enters the cutting chamber (7) by means of the inlet apparatus that forms the throttling device, which is implemented as an inlet nozzle arrangement (9) in the form of an annular slot nozzle that has an adjustable slot width, or
the adiabatic expansion is accomplished before the coolant enters the cutting chamber (7) by means of the inlet apparatus, which is implemented as an inlet chamber (8), ahead of which is a needle valve (10) with an adjustable nozzle opening that forms the throttling device and is provided upstream of an inlet opening (12) for the coolant in the inlet chamber (8).

2. Method according to claim 1, **characterized in that** the inlet chamber (8) is provided as a separate inlet chamber (8) that circumferentially encloses the cutting chamber (7) in the area of rotation of the at least one blade, with an inlet nozzle arrangement located circumferentially around the cutting chamber (7) between the inlet chamber (8) and the cutting chamber (7), by which means the gaseous coolant is introduced into the cutting chamber (7) circumferentially from different sides radially inward from the outside, or essentially radially inward from the outside, wherein a centripetal or at least substantially centripetal flow of the gaseous coolant is produced at least in the area of rotation, and subsequently the gaseous coolant and the pellets located therein are conveyed to an outlet of the cutting chamber (7).

3. Method according to any one of claims 1 to 2, **characterized in that** the pellets located in the gaseous coolant flow onward after the rotation region into the region of the outlet of the cutting chamber (7), where they are directed against a wall of the cutting chamber (7) at an angle of less than 10°, so that a rolling motion is imposed on the pellets located in the gaseous coolant there.

4. Method according to any one of claims 1 to 3, **characterized in that** the gaseous coolant is air or an inert gas or a reaction gas that is selected such that it can enter into a chemical reaction with the melt material to be granulated, preferably a melt material consisting of a material or material mixture with an active pharmaceutical ingredient.

5. Device for producing pellets from a melt material, having a perforated plate (2) with nozzles (1) located therein for the discharge of melt material, wherein a motor-driven cutter arrangement with a cutter head having at least one blade (3) and a cutter shaft (5) is located opposite the perforated plate (2), so that the at least one blade (3) can pass over the nozzles (1) in the perforated plate (2) in a rotating manner and in so doing can cut pellets of the melt material emerging there, wherein the device has a cutting chamber (7) in a housing (6, 6a, 6b), which chamber adjoins the perforated plate (2) and encloses at least the at least one blade (3) of the cutter arrangement, and through which chamber can flow a gaseous coolant that can be introduced into the cutting chamber (7) from an inlet apparatus, so that in the process the pellets of the melt material can be solidified in the coolant, wherein furthermore a throttling device is provided such that the gaseous coolant can be cooled by it through adiabatic expansion,
**characterized in that**
the inlet apparatus that forms the throttling device is implemented as an inlet nozzle arrangement (9) in the form of an annular slot nozzle that has an adjustable slot width, so that the adiabatic expansion takes place when the coolant enters the cutting chamber (7), or
the inlet apparatus is implemented as an inlet chamber (8), ahead of which is a needle valve (10) with an adjustable nozzle opening that forms the throttling device and is provided upstream of an inlet opening (12) for the coolant in the inlet chamber (8), so that the adiabatic expansion takes place before the coolant enters the cutting chamber (7).

6. Device according to claim 5, **characterized in that** the inlet chamber (8) is implemented as a separate inlet chamber (8) that circumferentially encloses the cutting chamber (7) in the area of rotation of the at least one blade (3), and has an inlet nozzle arrangement (9) arranged circumferentially around the cutting chamber (7) between the inlet chamber (8) and the cutting chamber (7), so that the gaseous coolant can be introduced there into the cutting chamber (7) circumferentially from different sides radially inward from the outside, or essentially radially inward from the outside, wherein a centripetal or at least substantially centripetal flow of the gaseous coolant is produced at least in the area of rotation, and subsequently the gaseous coolant and the pellets located therein are conveyed to an outlet (11) of the cutting chamber (7).

7. Device according to claim 6, **characterized in that** at least the inlet chamber (8) is lined with a thermally insulating material, preferably consisting of Teflon® or vitreous enamel.

## Revendications

1. Procédé pour la fabrication de granulés à partir d'une masse fondue, la masse fondue étant extrudée par les orifices (1) d'une plaque perforée (2) et étant ensuite granulée, un agencement de lames comportant au moins une lame (3) étant entrainé par un moteur et faisant face à la plaque perforée (2) de sorte que la au moins une lame (3) effleure les orifices (1) de la plaque perforée (2) et ce faisant sépare les granulés de la masse fondue extrudée, une chambre de coupe (7) contiguë à la plaque perforée (2) étant prévue dans un boîtier et entourant au moins la au moins une lame (3) de l'agencement de lames et étant traversée par un milieu réfrigérant gazeux, de sorte que les granulés provenant de la masse fondue se solidifient dans le milieu réfrigérant qui est introduit dans la chambre de coupe (7) à partir d'un dispositif d'alimentation, le milieu réfrigérant étant refroidi au moyen d'un dispositif d'étranglement par expansion adiabatique
**caractérisé en ce que**
l'expansion adiabatique se produit lors de l'entrée du milieu réfrigérant dans la chambre de coupe (7) au moyen du dispositif d'alimentation formant le dispositif d'étranglement configuré comme un agencement (9) de buses d'alimentation sous la forme d'une fente circulaire dont la largeur est réglable, ou
l'expansion adiabatique se produit avant l'entrée du milieu réfrigérant dans la chambre de coupe (7) au moyen du dispositif d'alimentation configuré comme une chambre d'arrivée (8) précédée en amont d'une valve à aiguille (10) dont l'ouverture de l'orifice est réglable constituant le dispositif d'étranglement, en amont d'une ouverture d'entrée (12) du milieu réfrigérant dans la chambre d'arrivée (8).

2. Procédé selon la revendication 1, **caractérisé en ce que** la chambre d'arrivée (8) est une chambre d'arrivée séparée (8) qui entoure la chambre de coupe (7) sur toute sa circonférence dans la zone de rotation de la au moins une lame avec un agencement d'orifices d'arrivée agencés autour de la circonférence de la chambre de coupe (7) entre la chambre d'arrivée (8) et la chambre de coupe (7) au moyen desquels le milieu réfrigérant gazeux est dirigé radialement dans la chambre de coupe (7) de l'extérieur vers l'intérieur ou sensiblement radialement de l'extérieur vers l'intérieur provenant de différents côtés et sur toute la circonférence, un écoulement centripète ou au moins un écoulement sensiblement centripète du milieu réfrigérant gazeux étant formé au moins dans la zone de rotation et ensuite le milieu de refroidissement gazeux et les granulés qui s'y trouvent étant amenés à une sortie de la chambre de coupe (7).

3. Procédé selon une des revendications 1 à 2, **caractérisé en ce que** les granulés se trouvant dans le milieu réfrigérant gazeux, après la zone de rotation, sont dirigés vers la zone de la sortie de la chambre de coupe (7) dans laquelle ils sont projetés contre une paroi de la chambre de coupe (7) avec un angle de moins de 10°, de sorte qu'un mouvement de rotation est imprimé aux granulés se trouvant dans le milieu réfrigérant.

4. Procédé selon une des revendications 1 à 3, **caractérisé en ce que** le milieu réfrigérant est de l'air ou un gaz inerte ou un gaz réactif choisi de sorte qu'il peut réagir chimiquement avec le matériau de matière fondue à granuler, de préférence un matériau de matière fondue constitué d'un matériau ou d'un mélange de matériaux de principes actifs pharmaceutiques.

5. Dispositif pour la fabrication de granulés à partir d'une masse fondue avec une plaque perforée (2) comportant un agencement d'orifices (1) pour extruder la masse fondue, un dispositif de coupe avec une tête de coupe comportant au moins une lame (3) et un porte-lames (5) entrainé par un moteur faisant face à la plaque perforée (2) de sorte que les orifices (1) de la plaque perforée (2) peuvent être effleurés en un mouvement circulaire par la au moins une lame (3) et les granulés provenant de la masse fondues peuvent être séparés, le dispositif comportant une chambre de coupe (7) logée dans un boîtier (6, 6a, 6b) contiguë à la plaque perforée (2) et entourant au moins la au moins une lame (3) de l'agencement de lames et étant traversée par un milieu réfrigérant gazeux pouvant être dirigé d'un dispositif d'alimentation vers la chambre de coupe (7), de sorte que les granulés provenant de la masse fondue se solidifient dans le milieu réfrigérant , un dispositif d'étranglement étant prévu de plus de sorte que le milieu réfrigérant gazeux peut être refroidi par expansion adiabatique,
**caractérisé en ce que**
le dispositif d'alimentation constituant le dispositif d'étranglement est configuré comme un agencement d'orifices d'alimentation (9) sous la forme d'une fente circulaire, dont la largeur est réglable de sorte que l'expansion adiabatique se produit lors de l'entrée du milieu réfrigérant dans la chambre de coupe (7), ou
le dispositif d'alimentation est configuré comme une chambre d'arrivée (8) précédée en amont d'une valve à aiguille (10) dont l'ouverture de l'orifice est réglable constituant le dispositif d'étranglement, en amont d'une ouverture d'entrée (12) du milieu réfrigérant dans la chambre d'arrivée (8), de sorte que l'expansion adiabatique se produit avant l'entrée du milieu réfrigérant dans la chambre de coupe (7).

6. Dispositif selon la revendication 5, **caractérisé en ce que** la chambre d'arrivée (8) est une chambre d'arrivée séparée (8) qui entoure la chambre de coupe (7) sur toute sa circonférence dans la zone de rotation de la au moins une lame (3) et comporte un agencement d'orifices d'arrivée (9) agencés tout autour de la chambre de coupe (7) entre la chambre d'arrivée (8) et la chambre de coupe (7) au moyen desquels le milieu réfrigérant gazeux est dirigé radialement dans la chambre de coupe (7) de l'extérieur vers l'intérieur ou sensiblement radialement de l'extérieur vers l'intérieur venant de différents côtés autour de la circonférence, un écoulement centripète ou au moins un écoulement sensiblement centripète du milieu réfrigérant gazeux étant formé au moins dans la zone de rotation et ensuite le milieu réfrigérant gazeux et les granulés qui s'y trouvent étant amenés à une sortie (11) de la chambre de coupe (7).

7. Dispositif selon la revendication 6, **caractérisé en ce que** au moins la chambre d'arrivée (8) est revêtue d'un matériau isolant thermique, de préférence Teflon® ou Emaille.
